# EUROPÄISCHE PATENTSCHRIFT

(11) **EP 0 732 568 B1**
(45) Veröffentlichungstag und Bekanntmachung des Hinweises auf die Patenterteilung: **11.09.2002**
(21) Anmeldenummer: 96104016.9
(22) Anmeldetag: 14.03.1996
(51) Int. Cl.: G01F 1/46, G01F 1/34

(54) **Staudrucksonde**
Total pressure probe
Sonde pour pression totale

(30) Priorität: 17.03.1995 DE 19509208
(43) Veröffentlichungstag der Anmeldung: 18.09.1996
(73) Patentinhaber: systec Controls Mess- und Regeltechnik GmbH, 82178 Puchheim (DE)
(72) Erfinder: Pötter, Friedrich, D-82178 Puchheim (DE)
(74) Vertreter: Petersen, Frank, Dipl.-Ing.

(56) Entgegenhaltungen:
- EP-A- 0 178 776
- EP-A- 0 198 197
- EP-A- 0 315 175
- EP-A- 0 431 345
- US-A- 4 154 100

## Beschreibung

Die Erfindung betrifft eine rohrförmige Staudrucksonde zur Messung des Durchflusses eines Strömungsmediums durch eine Rohrleitung, mit zwei Kanälen, die durch eine Trennwand separiert werden und mit Wirkdrucköffnungen in Anström- und in Abströmrichtung versehen sind.

Vergleichbare Standrucksonden sind beispielsweise bekannt aus der EP-A-0 178 776, der EP-A-0 315 175 oder der EP-A-0 198 197.

Im gesamten Anlagenbau werden Durchflußmeßvorrichtungen für strömende Medien eingesetzt. Diese Medien, unter denen im wesentlichen Dämpfe, Gase oder Flüssigkeiten zu verstehen sind, sollen dabei im wesentlichen einphasig sein, wobei allerdings geringe Verunreinigungen die notwendigen Messungen kaum beeinflussen. Als bekannte Durchflußmeßvorrichtungen werden dabei Normblenden bzw. Düsen, Wirbeldurchflußmesser oder Staudrucksonden verwandt. Von diesen Alternativen hat die Staudrucksonde den besonderen Vorteil, einen nur geringen bleibenden Druckverlust im strömenden Medium zu verursachen.

Die bekannten Staudrucksonden besitzen zwei sogenannte Wirkdruckkanäle, die mit Wirkdrucköffnungen in Anströmrichtung und in Abströmrichtung versehen sind. Zwischen den beiden Wirkdruckkänälen entsteht beim Eintauchen der Sonde in ein strömendes Medium ein Differenzdruck. Aus diesem kann auf die Strömungsgeschwindigkeit des an der Staudrucksonde vorbeifließenden Mediums zurückgeschlossen werden, wenn der Widerstandsbeiwert K der Staudrucksonde bekannt ist.

Bei den bekannten Staudrucksonden ist dieser Widerstandsbeiwert K aber deutlich abhängig von der Strömungsgeschwindigkeit des Mediums. Dies ist insbesondere unter dem Aspekt problematisch, daß die effektive Geschwindigkeit des durch eine Rohrleitung fließenden Strömungsmediums über den Querschnitt der Rohrleitung unterschiedlich ist. Am Rand der Rohrleitung, wo die Flüssigkeit haftet, hat sie letztendlich keine Geschwindigkeit, während die Geschwindigkeit in der Rohrmitte am größten ist.

Um diesem normalerweise asymmetrischen Strömungsprofil in der Rohrleitung Rechnung zu tragen, versucht man durch eine entsprechende Anordnung von mehreren Wirkdrucköffnungen über die Höhe der Sonde den Differenzdruck und damit die Mediumsgeschwindigkeit zu mittein. Wenn aber jetzt der Widerstandsbeiwert K wie oben beschrieben geschwindigkeitsabhängig ist, erhält man einen Wert, der nicht nur von der im Bereich der Wirkdrucköffnungen lokal unterschiedlichen effektiven Strömungsgeschwindigkeit abhängig ist sondern auch noch von dem sich abhängig von der Strömungsgeschwindigkeit ändernden Widerstandsbeiwert in diesem Bereich.

Die Änderung des Widerstandsbeiwertes K in Abhängigkeit von der Geschwindigkeit hängt zum großen Teil vom Ablösepunkt der Strömung von der Staudrucksonde ab. Bei seitlich gerundeten Profilen löst sich die Strömung bei höherer Strömungsgeschwindigkeit erst weiter hinten am Profil ab als bei langsamen Strömungsgeschwindigkeiten, wobei die Länge der laminar überströmten Strecke den Widerstandsbeiwert beeinflußt. Durch eine Ungleichmä-Bigkeit auf der laminar überströmten Strecke kann auch schon dort eine Ablösung der Strömung erfolgen, wodurch sich der Widerstandsbeiwert K ebenfalls ändert. Man erkennt an diesen Punkten, daß die Zusammenhänge zwischen Strömungsgeschwindigkeit und Widerstandsbeiwert K sehr komplex sein können. All dem Erfinder bisher bekannten Staudrucksonden besitzen entsprechende Seitenbereiche, wobei in diesen Seitenbereichen häufiger auch Schweißnähte liegen, die eine unbestimmte Oberfläche bilden und somit den Widerstandbeiwert K aufgrund der nicht eindeutig vorherbestimmbaren Oberfläche stark beeinflussen.

Die angesprochenen Schweißnähte sind bei den vorbekannten Meßsonden dabei deswegen notwendig, weil diese aus zwei Profilen und einer dazwischen liegenden Trennwand bestehen, die in diesem Bereich zusammengeschweißt werden.

Eine Staudrucksonde, ohne Schweißnähte im Seitenbereich wird in der EP-A-0 178 776 beschrieben. Bei dieser Staudrucksonde werden zwei Kanäle von einer separaten Hülle umgeben, die eine etwa quadratische Form aufweist. Die Hülle weist somit zur Strömungsrichtung eine Vorderkante, eine Hinterkante und zwei Seitenkanten auf. Die beiden Seitenkanten dienen dabei als Abrisskanten für die Strömung.

Aufgrund der hier ausgebildeten linienförmigen Abrisskante ist die Länge der vom Strömungsmedium laminar überströmten Strecke bis zum Ablösepunkt genau bekannt und ändert sich auch nicht in Abhängigkeit von der Strömungsgeschwindigkeit. Es lässt sich also für diese Staudrucksonde ein strömungsunabhängiger Widerstandbeiwert K bestimmen, womit die oben diskutierte nicht lineare Abhängigkeit bei der Bestimmung der Strömungsgeschwindigkeit über die gemittelten Differenzdrücke überwunden werden kann.

Aufgabe der vorliegenden Erfindung ist es daher eine Staudrucksonde anzugeben, die einfach zu fertigen sein soll, um preiswert angeboten werden zu können

Diese Aufgabe wird erfindungsgemäß dadurch gelöst, dass die Leisten, die mit den Abrisskanten für das Strömungsmedium versehen sind, einstückig mit der Trennwand ausgebildet sind, die die zwei Kanäle separiert.

Für die Herstellung der Staudrucksonde ist es vorteilhaft, wenn die Leisten einstückig mit der oben erwähnten Trennwand ausgebildet sind. Die Trennwand kann dann als Walzprofil hergestellt werden, wodurch eine sehr preiswerte Herstellung möglich ist. Bei einer weiter bevorzugten Ausführungsform sind die Kanäle, über die der Wirkdruck gemessen wird, als Schalen ausgebildet, die an die Trennwand angesetzt werden. Dazu kann die Trennwand Ausnehmungen zur formschlüssigen Verbindung der Ränder der im Querschnitt im wesentlichen bogenförmig ausgebildeten Schalen aufweisen. Durch diese Ausgestaltung der Trennwand wird die Fertigung weiter erleichtert.

Um die Schalen dann dicht mit der Trennwand verschweißen zu können, können die Schalen im Bereich ihrer Ränder und die Trennwand im Bereich der Ausnehmungen Flächen aufweisen, die im zusammengefügten Zustand von Schale und Trennwand eine entsprechende Schweißfuge zum Verschweißen von Trennwand und Schale bilden.

Bei einer bevorzugten Ausführungsform der damit gebildeten Staudrucksonden wird dabei die Außenkontur in Strömungsrichtung vom Anströmpunkt bis zur Abrißkante stetig und gekrümmt ausgebildet, wobei ein Wendepunkt in dieser Krümmung auftritt, so daß sich vor der Abrißkante Hohlehlen im Profil bilden. Über diese Hohlehlen wird die Strömungsgeschwindigkeit des Medium vor der Abrißkante aufgrund des Venturieffektes noch einmal erhöht und hierdurch der definierte Abriß der Strömung an der Abrißkante zusätzlich begünstigt.

Die oben erwähnten in den Schweißfugen liegenden Schweißnähte liegen dabei vorteilhafterweise in den angesprochenen Hohlehlen, wobei sich die Oberflächen der Schweißnähte im wesentlichen glatt an die benachbarten Oberflächen von Schale und Trennwand anschließen, so daß eine laminare Strömung bis zu Abrißkante möglich ist.

Vorteilhafterweise ist das Profil der Staudrucksonde spiegelsymmetrisch zu einer entlang der beiden Abrißkanten laufenden Ebene, wodurch zu erreichen ist, daß die Staudrucksonde sowohl bei einer Strömungsrichtung in der einen als auch in einer entgegengesetzten Richtung einsetzbar ist.

Bei einer weiteren Ausgestaltung einer bevorzugten Ausführungsform erstrecken sich die oben angesprochenen Schalen und Trennwand über die gesamte Länge der Sonde und enden an ihrem außerhalb der Rohrleitung befindlichen Ende übergangslos in einem Anschlußkopf der Sonde. Der wesentliche Vorteil in dieser Ausgestaltung liegt hier in der Weiterbildung gegenüber dem bisher bekannten Stand der Technik.

Die bisher bekannten Staudrucksonden sind nur im unteren Bereich in der oben beschriebenen Weise mit zwei durch Schalen und eine Trennwand gebildete Kanäle ausgebildet, die dann im oberen Bereich an einem oder zwei Kapillarröhrchen angeschlossen sind, über die die Verbindung mit dem Anschlußkopf gebildet wird. Diese Kapillarröhrchen haben aber den Nachteil, daß sich in ihnen bei Verwendung für strömendes Gas oder strömenden Dampf Kondensat ansammelt. Bedenkt man jetzt, daß bei niedrigen Strömungsgeschwindigkeiten mit der Meßsonde überhaupt nur im Bereich weniger Pa (Pa =N/m²=10⁻⁵ bar) gemessen wird, während 1 cm Wassersäule bereits 100 Pa entspricht, so erkennt man, daß die entsprechende Kapillarkondensation zu erheblichen Meßfehlern führen kann. Um diese Kapillarkondensation zu verhindern wird zur Zeit mit einer Beheizung der Sonde gearbeitet.

Da bei der beschriebenen bevorzugten Ausführungsform solche Kapillaren nicht auftreten, ist also die Gefahr von Meßfehlern stark verringert und auch auf eine entsprechende Beheizung der Meßsonde kann verzichtet werden.

Im Bereich, in dem die aus Schale und Trennwand gebildete Staudrucksonde durch die Wandung der Rohrleitung tritt, ist sie vorteilhafterweise mit einem rohrfömigen Mantel umgeben, der mindesten an einem seiner Enden flüssigkeitsdicht mit der Sonde verbunden ist. Damit kann das Abdichten einer eingebauten Staudrucksonde über eine normale dichtende Quetschverbindung erfolgen, die mit dem Mantel zusammenwirkt. Dabei wird ein Austreten von Medium aus der Rohrleitung durch die dichte Verbindung von Mantel und Staudrucksonde gewährleistet.

Bevorzugterweise läuft der angesprochene Mantel bis zum weiter oben erwähnten Anschlußkopf, in dem die Staudrucksonde endet und ist dort flüssigkeitsdicht angeschweißt.

Weitere Vorteile und Merkmale der Erfindung ergeben sich aus der nachfolgenden Beschreibung eines Ausführungsbeispiels. Dabei zeigt;
- Figur 1: einen Längsschnitt durch eine herkömmliche Staudrucksonde;
- Figur 2: Profile von herkömmlichen Staudrucksonden gemäß der Linie II-II in Figur 1;
- Figur 3: ein Strömungs- und Ablöseverhalten von Strömungsmedien bei niedriger bzw. hoher Strömungsgeschwindigkeit;
- Figur 4: ein Profil einer erfindungsgemäßen Staudrucksonde und
- Figur 5: einen Längsschnitt durch eine erfindungsgemäße Staudrucksonde in eingebautem Zustand.

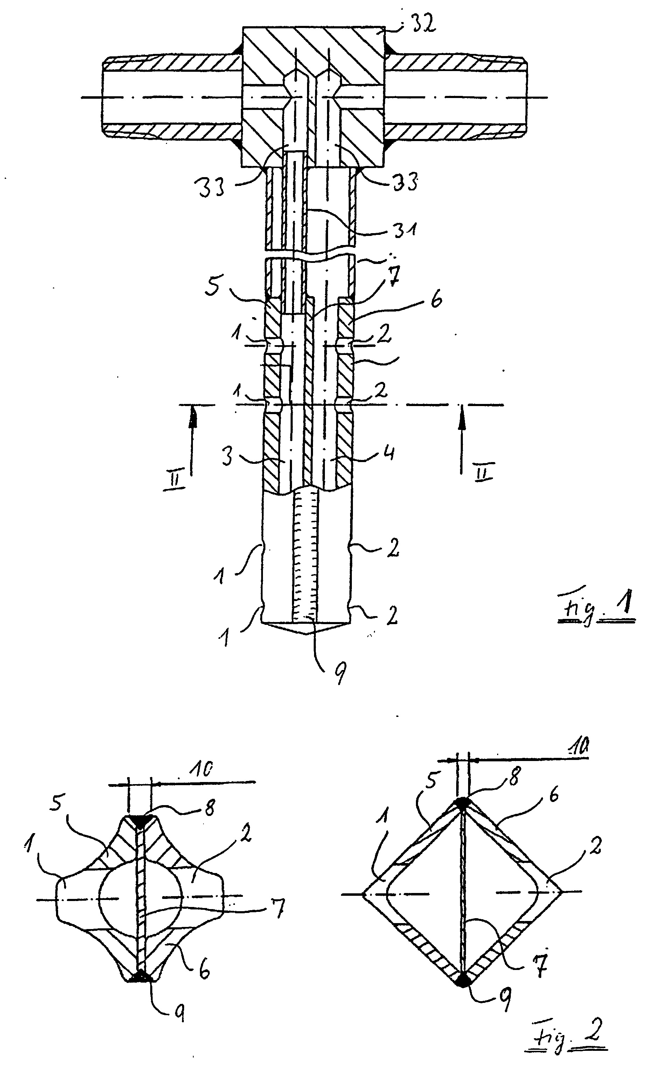

Figur 1 stellt eine bekannte Staudrucksonde dar. Sie wird in ihrem unteren Bereich durch die Wand einer nicht dargestellten Rohrleitung hindurch in ein strömendes Medium gehalten. Bei diesem Strömungsmedium kann es sich um Dampf, Gas oder eine Flüssigkeit handeln, gegebenenfalls mit geringen Verschmutzungen. Über mehrere Wirkdrucköffnungen 1, die in Anströmrichtung liegen und Wirkdrucköffnungen 2, die in Abströmrichtung liegen, wird über die Höhe des in die strömende Flüssigkeit eingetauchten Abschnitts der Staudrucksonde eine Druckdifferenz gemittelt. Dabei tritt diese Mittelung des Differenzdruckes darüber auf, daß die Wirkdrucköffnungen 1 bzw. 2 jeweils mit gemeinsamen Wirkdruckkanälen 3, 4 verbunden sind.

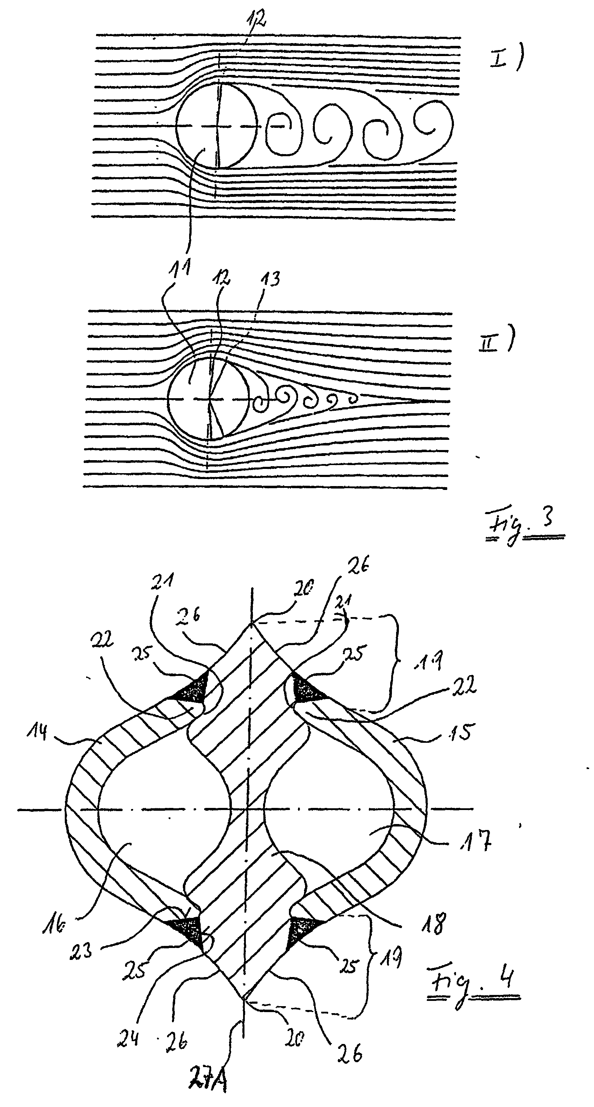

Diese Wirkdruckkanäle 3, 4 werden durch Schalen 5, 6 gebildet, die im wesentlichen bogenförmig ausgeführt sind und in der Mitte durch eine Trennwand 7 separiert werden. Dies läßt sich in der Figur 2 erkennen, die das Profil einer herkömmlichen Staudrucksonde entlang dem Schnitt II-II in Figur 1 darstellt.

Dabei sind in der Figur 2 zwei verschiedene Ausführungsformen bisher bekannte Staudrucksonden dargestellt. Man erkennt jeweils zwei im wesentlichen bogenförmig ausgebildete Schalen 5, 6 in die die entsprechenden Wirkdrucköffnungen 1, 2 eingebracht sind, sowie eine die beiden Schalen 5, 6 voneinander separierende Trennwand 7.

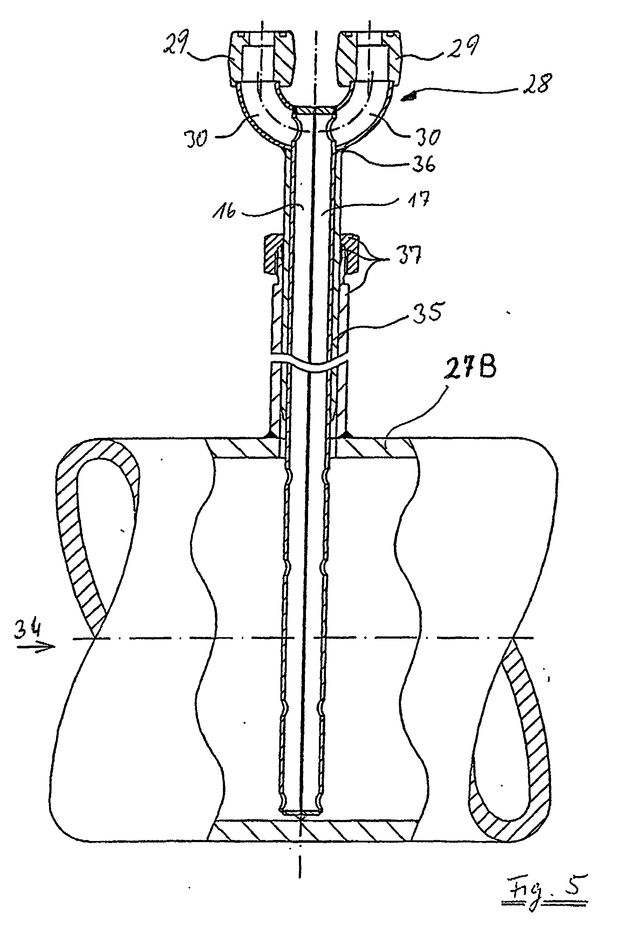

In den Seitenbereichen sind die Schalen 5, 6 und die Trennwand 7 durch Schweißnähte 8, 9 miteinander verbunden. Diese Schweißnähte bilden im wesentlichen den Bereich 10, in dem sich die Strömung beim Vorbeifließen an der Staudrucksonde ablöst. Die sich dabei aufgrund der Länge des Bereiches 10 ergebende Problematik soll an der Figur 3 erläutert werden:
Bei einer langsamen Strömung, wie sie in Figur 3 I dargestellt ist, fließt diese (hier von links kommend) entlang der Außenkontur der in die Strömung eingetauchten Staudrucksonde 11 bis zu einem Ablösepunkt 12, wo sich die Strömung von laminar in turbulent ändert. Die Länge der laminaren Strömung entlang der Außenkontur der Staudrucksonde 11 beieinflußt dabei den Widerstandsbeiwert K der Staudrucksonde.

In der Figur 3 II ist eine erheblich schnellere Strömung dargestellt und man erkennt, daß der Ablösepunkt 13 der Strömung von der eingetauchten Staudrucksonde 11 in Strömungsrichtung weiter hinten liegt als der Ablösepunkt 12 bei niedriger Strömungsgeschwindigkeit. Da sich damit bei Änderung der Strömungsgeschwindigkeit auch die Länge der laminar überströmten Strecke an der Staudrucksonde ändert, ändert sich demgemäß auch der Widerstandsbeiwert der Staudrucksonde 11.

Die hier beschriebene Problematik tritt auch bei dem relativ breiten Bereich 10 der in den Figuren 2 dargestellten Staudrucksonden auf: Aufgrund der Länge der überströmten Strecke ist nicht eindeutig, an welcher Stelle sich abhängig von der Geschwindigkeit die Strömung tatsächlich von der Sonde löst, d.h. auch bei dieser vorbekannten Staudrucksonde hier ist der Strömungsbeiwert der Staudrucksonde von der Geschwindigkeit des anströmenden Mediums abhängig. Hinzukommt, daß die Schweißnähte 9, 10 zwar poliert werden können, aber trotzden eine nicht exakt definierbare Oberfläche haben werden, so daß hier Rauhigkeiten auftreten, die an beliebiger Stelle im Bereich 10 zur Ablösung der Strömung führen können. Mit anderen Worten, der Widerstandsbeiwert K ändert sich aufgrund von deren Herstellungsverfahren von Staudrucksonde zu Staudrucksonde.

Diese Problematik wird umgangen bei einer erfindungsgemäßen Staudrucksonde, die das in Figur 4 dargestellte Querschnittsprofil aufweist. Auch bei dieser sind zwei Schalen 14, 15, die einen im wesentlichen gebogenen Querschnitt aufweisen zu erkennen, die zwei Kanäle 16, 17 begrenzen und durch eine Trennwand 18 separiert werden. Seitlich schließen sich dabei an die Staudrucksonde Leisten 19 an, die in Richtung der Strömung (in Figur 4 ebenfalls von links) seitlich von der Staudrucksonde abstehen und eine im wesentlichen linienförmige Abrißkante 20 für das Strömungsmedium haben, die den seitlichen Abschluß der Staudrucksonde bilden.

Aus Stabilitätsgründen kann dabei die Breite der linienförmigen Abrißkante bis zu etwa 2 mm betragen.

Die Leisten 19 sind einstückig mit der Trennwand 18 ausgebildet, wobei die Trennwand 18 mit Ausnehmungen 21 versehen ist, in die die Schalen 14, 15 mit ihren Rändern 22 formschlüssig eingreifen. Dabei weisen die Schalen im Bereich ihrer Ränder Flächen 23 auf und die Ausnehmungen Flächen 24, die im zusammengefügten Zustand von Schale und Trennwand, wie er in Figur 4 dargestellt ist, mit einer Schweißnaht 25 verbunden werden. Diese Schweißnähte 25 legen sich dabei im wesentlichen glatt an die benachbarten Oberflächen der Schalen 14, 15 und der Trennwand 18 an. Dabei liegen sie insbesondere in Hohlehlen 26, die auf der der Strömung zugewandten Seite der Staudrucksonde noch im laminar überströmten Bereich liegen. Somit wird also ein den Strömungsbeiwert K beeinflussendes Ablösen der Strömung an den Schweißnähten verhindert.

Die Hohlehlen 26 haben auf der strömungszugewandten Seite außerdem den Effekt, die Strömungsgeschwindigkeit nach dem Venturieffekt zu erhöhen, wodurch an den lininienförmigen Abrißkanten 20 die exakte Ablösung der Strömung unterstütz wird.

Damit eine Staudrucksonde auch bei Strömungen in entgegengesetzter Richtung verwandt werden kann, ist die in Figur 4 dargestellte Staudrucksonde im wesentlichen spiegelsymmetrisch zur durch die beiden Arißkanten 20 laufenden Spiegelebene 27A.

Die in der Figur 4 dargestellten Wirkdruckkanäle 16, 17 verlaufen wie in der Figur 5 zu erkennen ist über die gesamte Länge der Staudrucksonde und enden am außerhalb der Rohrleitung 27B befindlichen Ende in einem Anschlußkopf 28. An diesem finden sich die Wirkdruckanschlüsse 29, die über entsprechende Leitungsabschnitte 30 mit den entsprechenden Wirkdruckkanälen 16, 17 verbunden sind.

Im Gegensatz zu den hier beschriebenen durchgehenden Wirkdruckkanälen 16, 17 wurden bei den bisher bekannten Staudrucksonden, wie sie in der Figur 1 dargestellt sind, die Wirkdruckkanäle 3, 4 über Kapillarröhrchen 31 mit dem Anschlußkopf 32 und dem in diesen vorhandenen Wirkdruckbohrungen 33 verbunden, wobei in diesem Kapillarröhrchen 31 es leicht zu Kondensation kommen kann, was eine deutliche Meßwertverfälschung zu Folge hat. Um diese Meßwertverfälschung zu umgehen, wurde bei den bisher bekannten Staudrucksonden die Kapillarröhren 30 entsprechend beheizt. - Eine solche Beheizung entfällt bei der Ausführungsform der Staudrucksonde gemäß Figur 5, die ohne gefährdete Kapillaren auskommt.

Um die in Figur 5 dargestellte Staudrucksonde abgedichtet in die Rohrleitung 27B einbringen zu können, in der ein Medium 34 strömt, ist die Staudrucksonde mit einem rohrförmigen Mantel 35 umgeben, der in dem hier dargestellten Beispiel am Anschlußkopf 28 mit einer flüssigkeitsdichten Schweißnaht 36 befestigt ist. Aufgrund dieser flüssigkeitsdichten Schweißnaht 36 kann Strömungsmedium, das zwischen der Meßsonde und dem Mantel bis zum Anschlußkopf 28 gelaufen ist, dort nicht austreten.

Die Abdichtung des Mantels gegenüber der Rohrleitung erfolgt demgegenüber über eine Schneidringverschraubung 37. Über den rohrförmigen Mantel wird damit erreicht, daß trotz der weiter oben beschriebenen speziellen Profilierung der Staudrucksonde diese mit einer üblichen Dichtmethode lösbar in die Rohrleitung einbringbar ist.

## Patentansprüche

1. Rohrförmige Staudrucksonde zur Messung des Durchflusses eines Strömungsmediums durch eine Rohrleitung (27B) mit zwei Kanälen (16, 17). die durch eine Trennwand (18) separiert werden und mit Wirkdrucköffnungen (1, 2) in Anström- und in Abströmrichtung versehen sind,
wobei die Staudrucksonde mit in Strömungsrichtung (34) seitlich herausstehenden Leisten (19) mit im wesentlichen linienförmigen Abrisskanten (20) für das Strömungsmedium versehen ist,
**dadurch gekennzeichnet,**
**dass** die Leisten (19) einstückig mit der Trennwand (18) ausgebildet sind.

2. Staudrucksonde gemäß Anspruch 1,
**dadurch gekennzeichnet,**
**daß** die Trennwand (18) Ausnehmungen (21) zur formschlüssigen Verbindung von Rändern (22) von im Querschnitt im wesentlichen bogenförmig ausgebildeten, die Kanäle (16, 17) bildenden Schalen (14, 15) aufweist.

3. Staudrucksonde gemäß Anspruch 2,
**dadurch gekennzeichnet,**
**daß** die Schalen (14, 15) im Bereich Ihrer Ränder (22) und die Trennwand (18) im Bereich der Ausnehmungen (21) Flächen (23, 24) aufweisen, die im zusammengefügten Zustand von Schalen (14, 15) und Trennwand (18) Schweißfugen (25) zum Verschweißen von Trennwand (18) und Schalen (14, 15) bilden.

4. Staudrucksonde gemäß Anspruch 1,
**dadurch gekennzeichnet,**
**daß** in Strömungsrichtung (34) die Außenkontur der Staudrucksonde bis zur Abrisskante (20) stetig und gekrümmt ist und Wendepunkte in der Krümmung aufweist, wodurch vor der Abrisskante (20) die Strömungsgeschwindigkeit des Strömungsmediums erhöhende Hohlkehlen (26) in der Außenkontur der Staudrucksonde gebildet sind.

5. Staudrucksonde gemäß Anspruch 4,
**dadurch gekennzeichnet,**
**daß** in den Hohlkehlen (26) die Schweißnähte (25) liegen, mit denen die Schalen (14, 15) mit der Trennwand (18) verbunden sind, wobei die Oberflächen der Schweißnähte (25) sich im wesentlichen glatt an die benachbarten Oberflächen von Schalen (14, 15) und Trennwand (18) anschließen.

6. Staudrucksonde gemäß Anspruch 1,
**dadurch gekennzeichnet,**
**daß** das Profil der Staudrucksonde spiegelsymmetrisch ist zu einer entlang der beiden Abrisskanten (20) verlaufenden Ebene (27A).

7. Staudrucksonde insbesondere gemäß Anspruch 1,
**dadurch gekennzeichnet,**
**daß** die Kanäle (16, 17) und die Trennwand (18) über die gesamte Länge der Sonde laufen und am außerhalb der Rohrleitung (27B) befindlichen Ende in einem Anschlusskopf (28) enden.

8. Staudrucksonde gemäß Anspruch 7,
**dadurch gekennzeichnet,**
**daß** die die Kanäle (16, 17) bildenden Schalen (14, 15) und die Trennwand (18) in dem Bereich, wo sie durch die Wandung der Rohrleitung (27B) treten, mit einem rohrförmigen Mantel (35) umgeben sind, mit dem sie mindestens an einem seiner Enden flüssigkeitsdicht verbunden sind.

9. Staudrucksonde gemäß Anspruch 8,
**dadurch gekennzeichnet,**
**daß** der Mantel (35) bis zum Anschlußkopf (28) läuft und dort flüssigkeitsdicht angeschweißt ist.

## Claims

1. Tubular dynamic pressure probe for measuring the flow of a flow medium through a pipeline (27B), having two channels (16, 17) which are separated by a partition (18) and are provided with differential pressure openings (1, 2) in the inflow direction and in the outflow direction,
the dynamic pressure probe being provided with ridges (19) which project laterally outwards in the flow direction (34) and which have substantially linear break edges (20) for the flow medium,
**characterised in that**
the ridges (19) are formed integrally with the partition (18).

2. Dynamic pressure probe according to claim 1,
**characterised in that**
the partition (18) has recesses (21) for the interlocking connection of rims (22) of shells (14, 15) of substantially arc-shaped cross-section, which shells (14, 15) form the channels (16, 17).

3. Dynamic pressure probe according to claim 2,
**characterised in that**
the shells (14, 15), in the region of their rims (22), and the partition (18), in the region of the recesses (21), have surfaces (23, 24) which, when the shells (14, 15) and the partition (18) are in the assembled state, form welding grooves (25) for welding the partition (18) and the shells (14, 15) together.

4. Dynamic pressure probe according to claim 1,
**characterised in that**
in the flow direction (34), the outer contour of the dynamic pressure probe as far as the break edge (20) is constant and curved and has inflection points in the curved surface, so that flutes (26) are formed in the outer contour of the dynamic pressure probe, which flutes (26) increase the flow speed of the flow medium in front of the break edge (20).

5. Dynamic pressure probe according to claim 4,
**characterised in that**
in the flutes (26) there are located the welded seams (25) with which the shells (14, 15) are connected to the partition (18), the surfaces of the welded seams (25) following on substantially smoothly from the neighbouring surfaces of the shells (14, 15) and the partition (18).

6. Dynamic pressure probe according to claim 1,
**characterised in that**
the profile of the dynamic pressure probe is mirror-symmetrical with respect to a plane (27A) extending along the two break edges (20).

7. Dynamic pressure probe especially according to claim 1,
**characterised in that**
the channels (16, 17) and the partition (18) extend over the entire length of the probe and terminate in a connection head (28) at the end located outside the pipeline (27B).

8. Dynamic pressure probe according to claim 7,
**characterised in that**
the shells (14, 15), which form the channels (16, 17), and the partition (18) are, in the region where they pass through the wall of the pipeline (27B), surrounded by a tubular casing (35) to which they are connected in a fluid-tight manner at least at one of its ends.

9. Dynamic pressure probe according to claim 8,
**characterised in that**
the casing (35) extends as far as the connection head (28) where it is welded on in a fluid-tight manner.

## Revendications

1. Sonde pour pression totale de formé tubulaire pour la mesure du débit d'un fluide d'écoulement à travers une tuyauterie (27B), avec deux canaux (16, 17), qui sont séparés par une paroi de séparation (18) et qui sont munis d'ouvertures de pression effective (1, 2) en direction d'afflux et en direction de reflux, la sonde pour pression totale étant munie de lames (19) s'écartant latéralement vers l'extérieur en direction d'écoulement (34) avec des bords de rupture (20) sensiblement linéaires pour le fluide d'écoulement, **caractérisée en ce que** les lames (19) sont réalisées d'une seule pièce avec la paroi de séparation (18).

2. Sonde pour pression totale selon la revendication 1, **caractérisée en ce que** la paroi de séparation (18) comprend des évidements (21) pour une liaison en complémentarité de forme de bords (22) de coquilles (14, 15), dont la section est réalisée sensiblement en forme d'arc et qui forment les canaux (16, 17).

3. Sonde pour pression totale selon la revendication 2, **caractérisée en ce que** les coquilles (14, 15), dans la zone de leurs bords (22), et la paroi de séparation (18), dans la zone des évidements (21), sont munies de surfaces (23, 24) qui, lorsque les coquilles (14, 15) et la paroi de séparation (18) sont assemblées, forment des joints de soudure (25) permettant de souder ensemble la paroi de séparation (18) et les coquilles (14, 15).

4. Sonde pour pression totale selon la revendication 1, **caractérisée en ce que** le contour extérieur de la sonde pour pression totale est, en direction d'écoulement du flux (34), formé en continu et en courbe jusqu'au bord de rupture (20) et comprend des points d'inversion dans la courbure, ce qui conduit à la formation dans le contour extérieur de la sonde pour pression totale et devant le bord de rupture (20) de gorges creuses (26) augmentant la vitesse d'écoulement du fluide d'écoulement.

5. Sonde pour pression totale selon la revendication 4, **caractérisée en ce que** dans les gorges creuses (26) se trouvent les cordons de soudure (25), avec lesquelles les coquilles (14, 15) sont reliées à la paroi de séparation (18), les surfaces des cordons de soudure (25) se raccordant de manière sensiblement uniforme aux surfaces voisines des coquilles (14, 15) et de la paroi de séparation (18).

6. Sonde pour pression totale selon la revendication 1, **caractérisée en ce que** le profil de section de la sonde pour pression totale est réalisé en symétrie par réflexion par rapport à un plan (27A) s'étendant le long des deux bords de rupture (20).

7. Sonde pour pression totale en particulier selon la revendication 1, **caractérisée en ce que** les canaux (16, 17) et la paroi de séparation (18) s'étendent sur toute la longueur de la sonde et s'arrêtent à l'extrémité se trouvant en dehors de la tuyauterie (27B) dans une tête de raccordement (28).

8. Sonde pour pression totale selon la revendication 7, **caractérisée en ce que**, dans la zone où elles passent à travers la paroi de la tuyauterie (27B), les coquilles (14, 15) formant les canaux (16, 17) et la paroi de séparation (18) sont entourées d'une enveloppe de forme tubulaire (35), avec laquelle elles sont reliées de manière étanche au fluide à au moins une de ses extrémités.

9. Sonde pour pression totale selon la revendication 8, **caractérisée en ce que** l'enveloppe (35) s'étend jusqu'à la tête de raccordement (28) où elle est soudée de manière étanche au fluide.
